# EUROPEAN PATENT SPECIFICATION

(11) **EP 3 712 404 B1**
(45) Date of publication and mention of the grant of the patent: **18.09.2024**
(21) Application number: 20164843.3
(22) Date of filing: 23.03.2020
(51) Int. Cl.: F02C 7/14, F02K 3/115

(54) **TURBINE ENGINE CONFIGURATION INCLUDING PYLON MOUNTED HEAT EXCHANGER**
TURBINENMOTORKONFIGURATION MIT PYLONMONTIERTEM WÄRMETAUSCHER
CONFIGURATION DE MOTEUR À TURBINE À GAZ COMPRENANT UN ÉCHANGEUR DE CHALEUR MONTÉ SUR PYLÔNE

(30) Priority: 22.03.2019 US 201962822315 P; 16.01.2020 US 202016744508
(43) Date of publication of application: 23.09.2020
(73) Proprietor: RTX Corporation, Farmington, CT 06032 (US)
(72) Inventor: MULDOON, Marc J., Marlborough, CT Connecticut 06447 (US); CHAPIN, Melissa B., Ludlow, MA Massachusetts 01056 (US)
(74) Representative: Dehns

(56) References cited:
- EP-A1- 3 219 620
- EP-A2- 2 085 599
- US-A1- 2008 028 763
- US-A1- 2009 188 232

## Description

### TECHNICAL FIELD

The present disclosure relates generally to turbine engine heat exchanger configurations, and particularly to a pylon mounted heat exchanger for a gas turbine engine.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section further drives the compressor section to rotate. In some examples, a fan is also connected to the shaft and is driven to rotate via rotation of the turbine as well.

Within the gas turbine engine, multiple fluids such as air or oil, are actively cooled and provided to other engine components to cool and/or lubricate the other engine components. To achieve the active cooling, the gas turbine engines include heat exchangers within engine core or the engine nacelle.

US 2009/188232 A1 discloses a prior art aircraft as set forth in the preamble of claim 1.

US 2008/028763 A1 discloses a prior art thermal management system with thrust recovery for a gas turbine engine fan nacelle assembly.

EP 2 085 599 A2 discloses a prior art shared flow thermal management system.

EP 3 219 620 A1 discloses a prior art engine bleed system with a motorized compressor.

### SUMMARY OF THE INVENTION

From one aspect, there is provided an aircraft as recited in claim 1.

There is also provided a method for providing additional heat capacity in a gas turbine engine as recited in claim 7.

Features of embodiments of the invention are set forth in the dependent claims.

These and other features of the present invention can be best understood from the following specification and drawings, the following of which is a brief description.

### BRIEF DESCRIPTION OF THE DRAWINGS

Figure 1 illustrates a high level schematic view of an exemplary imaging system.
Figure 2 schematically illustrates an exemplary engine mounted to an aircraft wing via a mounting pylon.
Figure 3 schematically illustrates an alternative example engine mounted to an aircraft wing via a mounting pylon.

### DETAILED DESCRIPTION

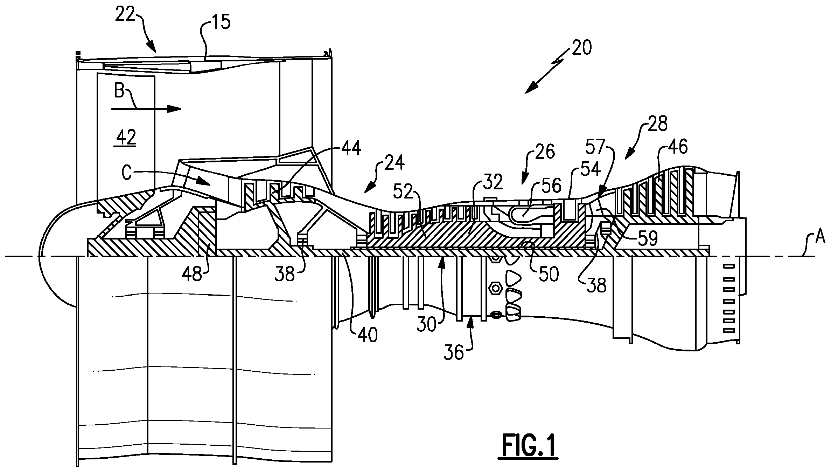

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

Existing gas turbine engines have moved toward accommodating higher electrical aircraft demands within the aircraft and accessory loads (i.e. electrical loads external to the engine 20) as well as propulsion loads (i.e. electrical loads within the engine 20). Increased power demands require the incorporation of additional generators, motors and other electrical components within the engine 20. Incorporation of these additional electrical components causes the generation of parasitic heat loads within the engine 20 that must be cooled in order to prevent overheating. In addition, physical space within the engine 20 is at a premium, and inclusion of the electrical components associated with higher electrical aircraft and aircraft engines can stress the space limitations.

One system that has the potential to use more electrical power, and also has a significant impact on aircraft engine performance is an Environmental Cooling System (ECS). The ECS is an air system that provides conditioned breathing air to the cabin for aircraft crew and passengers. In existing aircraft, the ECS is comprised of ducts that bleed compressed air off the engine compressor and then direct the air to a series of coolers (e.g. air-to-air coolers and vapor cycle coolers) that condition the air for delivery to an aircraft cabin.

Due to the high temperatures of compressor bleed air, existing systems positon one or more of the coolers for the ECS in a space within a mount pylon connecting the engine 20 to the aircraft body. The mount pylon is located within a bifurcation in the fan stream. Due to the position in the fan stream fan air can be ingested into the embedded cooler within the mount pylon as a cooling source for the bleed air prior to providing the bleed air to the cabin ECS system. In order to facilitate the removal of fluid from the engine core, and the return of the fluid to the engine core, additional integration between the engine and the aircraft is necessary to allow the engine to be removed and repaired. To facilitate this, the fluid lines can include quick-disconnect couplings that allow for attachment and separation of the two systems.

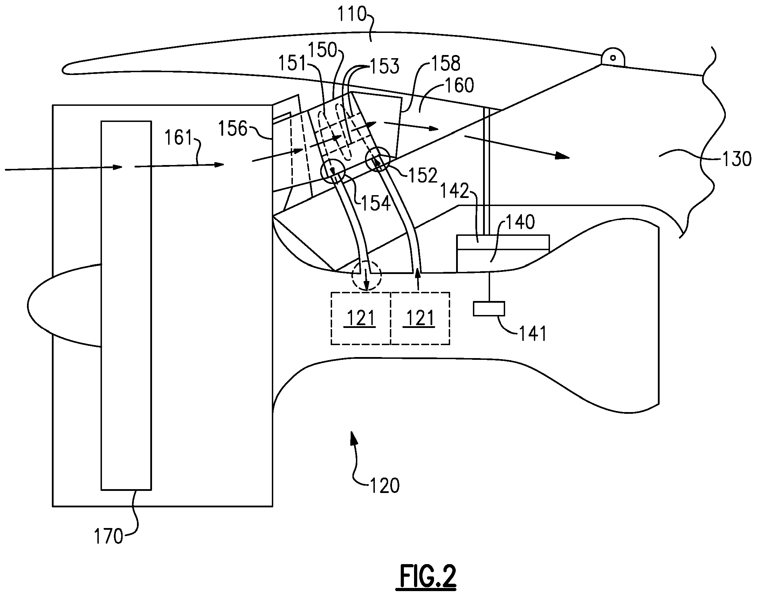

With continued reference to Figure 1, Figure 2 schematically illustrates an exemplary engine 120 mounted to an aircraft wing 110 via a mount pylon 130. In the more electric aircraft architecture, air for the ECS is acquired via an electrically driven compressor mounted within the aircraft and bleed air from the turbine engine 120 is not required to drive air to the ECS. In the example architecture, one or more electric motors 140 drive an electric compressor 142 which provides compressed air to the ECS within the aircraft. The electric motors 140 receive generated electricity from a generator 141 within the engine 120. The air that is compressed by the electric compressor 142 is sourced from any ambient air source, and is not sourced from within the engine core. The utilization of the electric motor 140 creates a new heat load that is not present in conventional aircraft.

Due to the utilization of the electric compressor 142, ambient air can be obtained and compressed for utilization in the ECS, and it is not necessary to precool the air, as would be required when pulling air from a compressor bleed. This in turn allows the cooler that is positioned in the pylon space in conventional systems to be replaced with an engine system cooler 150. The engine system cooler 150 is positioned in the pylon space 160, which is within the bifurcation and also contains the mount pylon 130. The engine system cooler 150 includes a first fluid inlet 152 and a first fluid outlet 154. The first fluid inlet 152 connects an internal passage 151 within the cooler 150 to an engine system 121 such that fluid from the engine system 121 can be drawn out of the engine 120 and provided to the internal passage 151. The first fluid outlet 154 returns the fluid from the internal passage 151 to the engine 120. In some cases, the fluid is returned to the same engine system 121 that it originated from. In alternative cases, the fluid is returned to a distinct engine system 121 as part of a larger coolant cycle.

The cooler 150 also includes a second inlet 156 configured to receive an airflow 161 from a fan section 170 of the engine 120. The second inlet 156 provides the relatively cold fan air to a second internal passage 153 (or set of second internal passages 153) within the cooler 150. A second outlet 158 dumps spent air from the cooler 150 into a bypass flow and allows the spent air to exit the engine 120 structure.

In some examples, the cooler 150 is an air-air cooler, and the fluid extracted from the engine 120 is a compressed air from a compressor bleed. By way of example, a cooled cooling air system could utilize this configuration. To provide cooled engine air from a compressor bleed to a turbine on board injection system, a compressor on board injection system, or to any other engine system utilizing cooled cooling air.

In other examples, the cooler 150 is an air-oil cooler with the first inlet 152 withdrawing an oil based lubricant/coolant, cooling the oil based lubricant/coolant using the cooler 150, and returning the cooled oil based lubricant/coolant to the engine 120 via the first outlet 154.

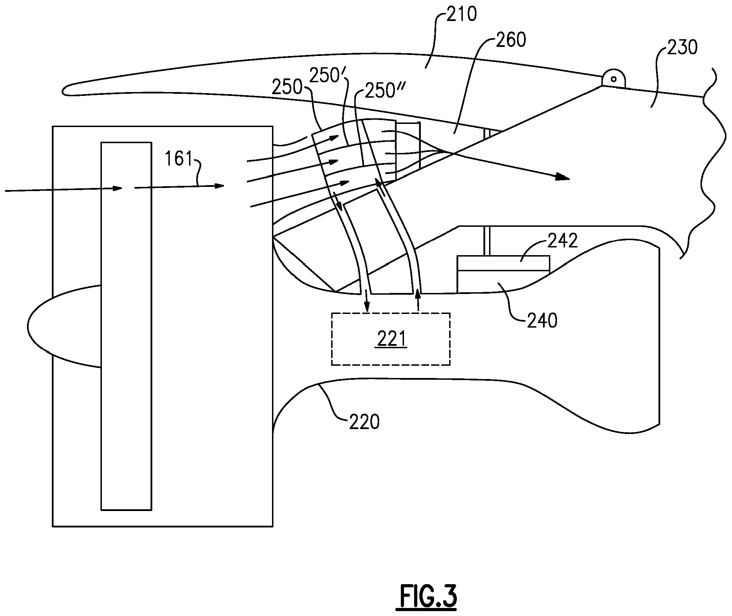

With continued reference to Figure 2, and with like numerals indicating like elements, Figure 3 schematically illustrates an alternative example engine 220 mounted to an aircraft wing 210 via a mounting pylon 230. Air for the ECS is acquired via an electrically driven compressor mounted within the aircraft and bleed air from the turbine engine 220 is not required to drive air to the ECS. In the example architecture, one or more electric motors 240 drive an electric compressor 242 which provides compressed air to the ECS within the aircraft. The air that is compressed by the electric compressor 242 is sourced from any ambient air source, and is not sourced from within the engine core. The utilization of the electric motor 240 creates a new heat load that is not present in conventional aircraft.

Disposed within the pylon space 260 (within the bifurcation) are three heat exchangers 250, 250', 250". In some examples, each of the heat exchangers 250, 250', 250" is connected to the same engine system 221. In alternative examples, each heat exchanger 250, 250', 250" is connected to a distinct engine system 221. The heat exchangers 250, 250', 250" each include internal configurations substantially similar to that described above with regards to the heat exchanger 150 and illustrated in Figure 1, and can be air-air heat exchangers, air-oil heat exchangers, or any combination of the two.

Positioning an engine system cooler, such as the engine system coolers 150, 250 in the pylon space 160, 260 provides for an improved heat exchanger efficiency, because being positioned in the engine nacelle bifurcation allows the heat exchanger 150, 250 efficiency to benefit from a relatively high source pressure obtained from the ram effect of having the entire inlet 156, 256 duct perimeter be entirely in the fan stream 161. In contrast, engine-mounted heat exchangers that are flush with the engine nacelle include only the outer edge of the inlet duct in the fan stream 161. By taking advantage of the available ram effect, a higher-efficiency, smaller-sized heat exchanger can be used in the pylon space 160 as compared to heat exchangers that are packaged interior to the engine nacelle.

Further, including the engine system cooler 150, 250 in the pylon space 160, 260 improves the nacelle packaging efficiency by removing bulky components from the engine nacelle. Heat exchangers mounted within the engine nacelle are among the physically largest components that fit between the engine and nacelle and inclusion of the heat exchanger within the nacelle may prevent the achievement of the lowest-drag or "ideal' nacelle flowpath. This affect is especially prominent for a high heat-load applications. By taking advantage of the pylon packaging instead of under the engine nacelle it may be possible to design more efficient nacelle lines.

Finally, moving the heat exchangers 150, 250 to the pylon space 160, 260 provides for additional heat capacity within the engine. For especially-high heat load applications there is insufficient space within an engine nacelle to package the required-size heat exchanger(s). By placing the heat exchanger 150, 250 within the pylon space 160, 260 this limitation is overcome via the additional space as well as the potential for a reduced-size heat-exchanger due to utilization of improved ram-air effect.

Although an embodiment of this invention has been disclosed, a worker of ordinary skill in this art would recognize that certain modifications would come within the scope of this invention. For that reason, the following claims should be studied to determine the true scope and content of this invention.

## Claims

1. An aircraft comprising:
at least one gas turbine engine (20; 120; 220) connected to a wing (110; 210) via an engine pylon (130; 230), the gas turbine engine (20; 120; 220) including an engine core having a compressor section (24), a combustor section (26), a turbine section (28), and at least one actively cooled engine system (121; 221);
a fan (42; 70) disposed fore of the engine core and rotatably connected to the engine core via a shaft (40), the engine pylon (130; 230) being disposed within a bifurcation that intersects a fan stream (161) of the fan (42; 70) and includes a pylon space (160; 260); and
at least one heat exchanger (150; 250; 250'; 250") disposed within the pylon space (160; 260), the heat exchanger (150; 250; 250'; 250") including a first inlet (152) connected to the at least one actively cooled engine system (121; 221) and a first outlet (154) connected to the at least one actively cooled engine system (121; 221),
wherein the at least one actively cooled engine system (121; 221) is interior to the engine core,
**characterised in that**
the aircraft comprises an electric generator (141) connected to said engine core such that rotation of the electric generator (141) is driven by the shaft (40) and an electric compressor (142; 242) is driven by the electric generator (141), wherein the electric compressor (142; 242) is configured to source air from an ambient air source, and wherein a fluid outlet of the electric compressor (142; 242) is fluidly connected to an aircraft cabin environmental cooling system (ECS).

2. The aircraft of claim 1, wherein the at least one heat exchanger (150; 250; 250'; 250") includes at most three heat exchangers (250, 250'; 250").

3. The aircraft of claim 1 or 2, wherein the at least one heat exchanger (150; 2250; 250'; 250") includes at least one air-oil heat exchanger (150; 250; 250'; 250").

4. The aircraft of any preceding claim, wherein the at least one heat exchanger (150; 250; 250'; 250") includes at least one air-air heat exchanger (150; 250; 250'; 250").

5. The aircraft of any preceding claim, wherein the at least one heat exchanger (150; 250; 250'; 250") includes a second inlet (156) disposed in the fan stream (161) and configured to ingest fan stream air.

6. The aircraft of any preceding claim, wherein the at least one heat exchanger (150; 250; 250'; 250") includes a second outlet (158) configured to exhaust spent fan stream air to the fan stream.

7. A method for providing additional heat capacity in a gas turbine engine (20; 120; 220) comprising:
removing a cooling fluid from at least one engine system (121; 221) within a gas turbine engine nacelle (15);
providing the removed cooling fluid to a heat exchanger (150; 250; 250'; 250") disposed within a pylon space (160; 260) of a bifurcation that intersects a fan stream (161) and also contains a pylon (130; 230) connecting the gas turbine engine nacelle (15) to an aircraft wing (110; 210);
cooling the cooling fluid within the heat exchanger (150; 250; 250'; 250");
returning the cooling fluid to the at least one engine system (121; 221);
providing compressed air to a cabin environmental cooling system (ECS) from an electric compressor (142; 242); and
powering the electric compressor (142; 242) via an electric generator (141), wherein the electric generator (141) is driven by a shaft (40) within the gas turbine engine nacelle (15), wherein the electric compressor (142; 242) sources air from an ambient air source, and wherein a fluid outlet of the electric compressor (142; 242) is fluidly connected to an aircraft cabin environmental cooling system (ECS).

8. The method of claim 7, wherein removing the cooling fluid from at least one engine system (221) and returning the cooling fluid to the at least one engine system (221) comprise removing the cooling fluid from a single engine system (221) in the at least one engine system and returning the cooling fluid to the single engine system (221) in the at least one engine system (221).

9. The method of claim 7, wherein removing the cooling fluid from at least one engine system (121) and returning the cooling fluid to the at least one engine system (121) comprise removing the cooling fluid from a first engine system (121) in the at least one engine system (121) and returning the cooling fluid to a second engine system (121) in the at least one engine system (121), wherein the first engine system (121) and the second engine system (121) are part of a single coolant cycle.

10. The method of any of claims 7 to 9, wherein providing the removed cooling fluid to a heat exchanger (250; 250'; 250") comprises providing the cooling fluid to three heat exchangers (250; 250'; 250").

11. The method of claim 9, wherein cooling the cooling fluid within the heat exchanger (150; 250; 250'; 250") comprises ingesting fan stream air (161) along a cooling flowpath (153) within the heat exchanger (150; 250; 250'; 250") and passing the cooling fluid through the heat exchanger (150; 250; 250'; 250") along a circuitous route (151).

12. The method of any of claims 7 to 11, wherein the heat exchanger (150; 250; 250'; 250") is an air-air heat exchanger (150; 250; 250'; 250").

13. The method of any of claims 7 to 11, wherein the heat exchanger (150; 250; 250'; 250") is an air-oil heat exchanger (150; 250; 250'; 250").

## Patentansprüche

1. Flugzeug, umfassend:
mindestens ein Gasturbinentriebwerk (20; 120; 220), das über einen Triebwerksmast (130; 230) mit einem Flügel (110; 210) verbunden ist, wobei das Gasturbinentriebwerk (20; 120; 220) einen Triebwerkskern mit einem Verdichterabschnitt (24), einem Brennkammerabschnitt (26), einem Turbinenabschnitt (28) und mindestens einem aktiv gekühlten Triebwerkssystem (121; 221) aufweist;
ein Gebläse (42; 70), das vor dem Triebwerkskern angeordnet und über einen Schaft (40) drehbar mit dem Triebwerkskern verbunden ist, wobei der Triebwerksmast (130; 230) innerhalb einer Gabelung angeordnet ist, die einen Gebläsestrom (161) des Gebläses (42; 70) schneidet und einen Mastraum (160; 260) aufweist; und
mindestens einen Wärmetauscher (150; 250; 250'; 250"), der innerhalb des Mastraums (160; 260) angeordnet ist, wobei der Wärmetauscher (150; 250; 250'; 250") einen ersten Einlass (152), der mit dem mindestens einen aktiv gekühlten Triebwerkssystem (121; 221) verbunden ist, und einen ersten Auslass (154), der mit dem mindestens einen aktiv gekühlten Triebwerkssystem (121; 221) verbunden ist, aufweist,
wobei sich das mindestens eine aktiv gekühlte Triebwerkssystem (121; 221) im Inneren des Triebwerkskerns befindet,
**dadurch gekennzeichnet, dass**
das Flugzeug einen elektrischen Generator (141) umfasst, der mit dem Triebwerkskern derart verbunden ist, dass die Drehung des elektrischen Generators (141) durch den Schaft (40) angetrieben wird und ein elektrischer Kompressor (142; 242) durch den elektrischen Generator (141) angetrieben wird,, wobei der elektrische Kompressor (142; 242) so vorgesehen ist, dass er Luft aus einer Umgebungsluftquelle bezieht, und wobei ein Fluidauslass des elektrischen Kompressors (142; 242) in Fluidverbindung mit einem Flugzeugkabinen-Umgebungskühlsystem (environmental cooling system - ECS) steht.

2. Flugzeug nach Anspruch 1, wobei der mindestens eine Wärmetauscher (150; 250; 250'; 250") höchstens drei Wärmetauscher (250, 250'; 250") aufweist.

3. Flugzeug nach Anspruch 1 oder 2, wobei der mindestens eine Wärmetauscher (150; 2250; 250'; 250") mindestens einen Luft-Öl-Wärmetauscher (150; 250; 250'; 250") aufweist.

4. Flugzeug nach einem der vorherigen Ansprüche, wobei der mindestens eine Wärmetauscher (150; 250; 250'; 250") mindestens einen Luft-Luft-Wärmetauscher (150; 250; 250'; 250") aufweist.

5. Flugzeug nach einem der vorherigen Ansprüche, wobei der mindestens eine Wärmetauscher (150; 250; 250'; 250") einen zweiten Einlass (156) aufweist, der in dem Gebläsestrom (161) angeordnet und so vorgesehen ist, dass er Gebläsestromluft ansaugt.

6. Flugzeug nach einem der vorherigen Ansprüche, wobei der mindestens eine Wärmetauscher (150; 250; 250'; 250") einen zweiten Auslass (158) aufweist, der so vorgesehen ist, dass er verbrauchte Gebläsestromluft in den Gebläsestrom abgibt.

7. Verfahren zum Bereitstellen zusätzlicher Wärmekapazität in einem Gasturbinentriebwerk (20; 120; 220), umfassend:
Entfernen eines Kühlfluids aus mindestens einem Triebwerkssystem (121; 221) innerhalb einer Gasturbinentriebwerksgondel (15);
Bereitstellen des entfernten Kühlfluids zu einem Wärmetauscher (150; 250; 250'; 250"), der in einem Mastraum (160; 260) einer Gabelung angeordnet ist, die einen Gebläsestrom (161) schneidet und auch einen Mast (130; 230) enthält, der die Gasturbinentriebwerksgondel (15) mit einem Flugzeugflügel (110; 210) verbindet;
Kühlen des Kühlfluids innerhalb des Wärmetauschers (150; 250; 250'; 250");
Zurückführen des Kühlfluids zu dem mindestens einen Triebwerkssystem (121; 221);
Bereitstellen von Druckluft zu einem Kabinen-Umgebungskühlsystem (ECS) von einem elektrischen Kompressor (142; 242); und
Betreiben des elektrischen Kompressors (142; 242) über einen elektrischen Generator (141), wobei der elektrische Generator (141) durch einen Schaft (40) innerhalb der Gasturbinentriebwerksgondel (15) angetrieben wird, wobei der elektrische Kompressor (142; 242) Luft aus einer Umgebungsluftquelle bezieht, und wobei ein Fluidauslass des elektrischen Kompressors (142; 242) in Fluidverbindung mit einem Flugzeugkabinen-Umgebungskühlsystem (ECS) steht.

8. Verfahren nach Anspruch 7, wobei das Entfernen des Kühlfluids aus mindestens einem Triebwerkssystem (221) und das Zurückführen des Kühlfluids zu dem mindestens einen Triebwerkssystem (221) das Entfernen des Kühlfluids aus einem einzelnen Triebwerkssystem (221) in dem mindestens einen Triebwerkssystem und das Zurückführen des Kühlfluids zu dem einzelnen Triebwerkssystem (221) in dem mindestens einen Triebwerkssystem (221) umfassen.

9. Verfahren nach Anspruch 7, wobei das Entfernen des Kühlfluids aus mindestens einem Triebwerkssystem (121) und das Zurückführen des Kühlfluids zu dem mindestens einen Triebwerkssystem (121) das Entfernen des Kühlfluids aus einem ersten Triebwerkssystem (121) in dem mindestens einen Triebwerkssystem (121) und das Zurückführen des Kühlfluids zu einem zweiten Triebwerkssystem (121) in dem mindestens einen Triebwerkssystem (121) umfassen, wobei das erste Triebwerkssystem (121) und das zweite Triebwerkssystem (121) Teil eines einzigen Kühlmittelkreislaufs sind.

10. Verfahren nach einem der Ansprüche 7 bis 9, wobei das Bereitstellen des entfernten Kühlfluids für einen Wärmetauscher (250; 250'; 250") das Bereitstellen des Kühlfluids für drei Wärmetauscher (250; 250'; 250") umfasst.

11. Verfahren nach Anspruch 9, wobei das Kühlen des Kühlfluids innerhalb des Wärmetauschers (150; 250; 250'; 250") das Ansaugen von Gebläsestromluft (161) entlang eines Kühlungsströmungspfades (153) innerhalb des Wärmetauschers (150; 250; 250'; 250") und das Leiten des Kühlfluids durch den Wärmetauscher (150; 250; 250'; 250") entlang einer Kreislaufstrecke (151) umfasst.

12. Verfahren nach einem der Ansprüche 7 bis 11, wobei der Wärmetauscher (150; 250; 250'; 250") ein Luft-Luft-Wärmetauscher (150; 250; 250'; 250") ist.

13. Verfahren nach einem der Ansprüche 7 bis 11, wobei der Wärmetauscher (150; 250; 250'; 250") ein Luft-Öl-Wärmetauscher (150; 250; 250'; 250") ist.

## Revendications

1. Aéronef comprenant :
au moins un moteur à turbine à gaz (20 ; 120 ; 220) relié à une aile (110 ; 210) par l'intermédiaire d'un mât réacteur (130 ; 230), le moteur à turbine à gaz (20 ; 120 ; 220) comportant un noyau de moteur ayant une section de compresseur (24), une section de chambre de combustion (26), une section de turbine (28) et au moins un système de moteur refroidi activement (121 ; 221) ;
une soufflante (42 ; 70) disposée à l'avant du noyau de moteur et reliée de manière rotative au noyau de moteur par l'intermédiaire d'un arbre (40), le mât réacteur (130 ; 230) étant disposé à l'intérieur d'une bifurcation qui croise un flux de soufflante (161) de la soufflante (42 ; 70) et comporte un espace de mât (160 ; 260) ; et
au moins un échangeur de chaleur (150 ; 250 ; 250' ; 250'') disposé à l'intérieur de l'espace de mât (160 ; 260), l'échangeur de chaleur (150 ; 250 ; 250' ; 250'') comportant une première entrée (152) reliée à l'au moins un système de moteur refroidi activement (121 ; 221) et une première sortie (154) reliée à l'au moins un système de moteur refroidi activement (121 ; 221),
dans lequel l'au moins un système de moteur refroidi activement (121 ; 221) est à l'intérieur du noyau de moteur,
**caractérisé en ce que**
l'aéronef comprend un générateur électrique (141) relié audit noyau de moteur de telle sorte que la rotation du générateur électrique (141) est entraînée par l'arbre (40) et qu'un compresseur électrique (142 ; 242) est entraîné par le générateur électrique (141), dans lequel le compresseur électrique (142 ; 242) est configuré pour fournir de l'air à partir d'une source d'air ambiant, et dans lequel une sortie de fluide du compresseur électrique (142 ; 242) est reliée fluidiquement à un système de refroidissement environnemental (ECS) de cabine d'aéronef.

2. Aéronef selon la revendication 1, dans lequel l'au moins un échangeur de chaleur (150 ; 250 ; 250' ; 250'') comporte au plus trois échangeurs de chaleur (250, 250' ; 250'').

3. Aéronef selon la revendication 1 ou 2, dans lequel l'au moins un échangeur de chaleur (150 ; 2250 ; 250' ; 250'') comporte au moins un échangeur de chaleur air-huile (150 ; 250 ; 250'' ; 250").

4. Aéronef selon une quelconque revendication précédente, dans lequel l'au moins un échangeur de chaleur (150 ; 250 ; 250' ; 250'') comporte au moins un échangeur de chaleur air-air (150 ; 250 ; 250' ; 250'').

5. Aéronef selon une quelconque revendication précédente, dans lequel l'au moins un échangeur de chaleur (150 ; 250 ; 250' ; 250'') comporte une seconde entrée (156) disposée dans le flux de soufflante (161) et configurée pour aspirer l'air de flux de soufflante.

6. Aéronef selon une quelconque revendication précédente, dans lequel l'au moins un échangeur de chaleur (150 ; 250 ; 250' ; 250") comporte une seconde sortie (158) configurée pour évacuer l'air de flux de soufflante épuisé vers le flux de soufflante.

7. Procédé de fourniture d'une capacité thermique supplémentaire dans un moteur à turbine à gaz (20 ; 120 ; 220) comprenant :
le retrait d'un fluide de refroidissement d'au moins un système de moteur (121 ; 221) à l'intérieur d'une nacelle de moteur à turbine à gaz (15) ;
la fourniture du fluide de refroidissement retiré à un échangeur de chaleur (150 ; 250 ; 250' ; 250'') disposé à l'intérieur d'un espace de mât (160 ; 260) d'une bifurcation qui croise un flux de soufflante (161) et contient également un mât (130 ; 230) reliant la nacelle (15) de moteur à turbine à gaz à une aile d'aéronef (110 ; 210) ;
le refroidissement du fluide de refroidissement à l'intérieur de l'échangeur de chaleur (150 ; 250 ; 250' ; 250'') ;
le renvoi du fluide de refroidissement vers l'au moins un système de moteur (121 ; 221) ;
la fourniture d'air comprimé à un système de refroidissement environnemental (ECS) de cabine à partir d'un compresseur électrique (142 ; 242) ; et
l'alimentation du compresseur électrique (142 ; 242) par l'intermédiaire d'un générateur électrique (141), dans lequel le générateur électrique (141) est entraîné par un arbre (40) à l'intérieur de la nacelle (15) de moteur à turbine à gaz, dans lequel le compresseur électrique (142 ; 242) fournit de l'air à partir d'une source d'air ambiant, et dans lequel une sortie de fluide du compresseur électrique (142 ; 242) est reliée fluidiquement à un système de refroidissement environnemental (ECS) de cabine d'aéronef.

8. Procédé selon la revendication 7, dans lequel le retrait du fluide de refroidissement d'au moins un système de moteur (221) et le renvoi du fluide de refroidissement vers l'au moins un système de moteur (221) comprennent le retrait du fluide de refroidissement d'un système de moteur (221) unique dans l'au moins un système de moteur et le renvoi du fluide de refroidissement vers le système de moteur unique (221) dans l'au moins un système de moteur (221).

9. Procédé selon la revendication 7, dans lequel le retrait du fluide de refroidissement d'au moins un système de moteur (121) et le renvoi du fluide de refroidissement vers l'au moins un système de moteur (121) comprennent le retrait du fluide de refroidissement d'un premier système de moteur (121) dans l'au moins un système de moteur (121) et le renvoi du fluide de refroidissement vers un second système de moteur (121) dans l'au moins un système de moteur (121), dans lequel le premier système de moteur (121) et le second système de moteur (121) font partie d'un seul cycle de refroidissement.

10. Procédé selon l'une quelconque des revendications 7 à 9, dans lequel la fourniture du fluide de refroidissement retiré à un échangeur de chaleur (250 ; 250' ; 250'') comprend la fourniture du fluide de refroidissement à trois échangeurs de chaleur (250 ; 250' ; 250'').

11. Procédé selon la revendication 9, dans lequel le refroidissement du fluide de refroidissement à l'intérieur de l'échangeur de chaleur (150 ; 250 ; 250' ; 250'') comprend l'aspiration d'air de flux de soufflante (161) le long d'un trajet d'écoulement de refroidissement (153) à l'intérieur de l'échangeur de chaleur (150 ; 250 ; 250' ; 250'') et le passage du fluide de refroidissement à travers l'échangeur de chaleur (150 ; 250 ; 250' ; 250'') le long d'un chemin détourné (151).

12. Procédé selon l'une quelconque des revendications 7 à 11, dans lequel l'échangeur de chaleur (150 ; 250 ; 250' ; 250'') est un échangeur de chaleur air-air (150 ; 250 ; 250' ; 250'').

13. Procédé selon l'une quelconque des revendications 7 à 11, dans lequel l'échangeur de chaleur (150 ; 250 ; 250' ; 250'') est un échangeur de chaleur air-huile (150 ; 250 ; 250' ; 250").
